# EUROPEAN PATENT APPLICATION

(11) **EP 4 832 621 A1**
(43) Date of publication of application: **28.10.2026**
(21) Application number: 25171958.9
(22) Date of filing: 23.04.2025
(51) Int. Cl.: H04W 72/11, H04W 16/14, H04W 72/12

(54) **MULTI-RAT SPECTRUM SHARING**

(71) Applicant: Nokia Technologies Oy, 02610 Espoo (FI)
(72) Inventor: BONFANTE, Andrea, Paris (FR); KUCERA, Stepan, Munich (DE); SAYED HASSAN, Mohamad, Epinay sur-orge (FR); SONG, Jian, Palaiseau (FR)
(74) Representative: Bryers Intellectual Property Ltd

(57) **Abstract**

Example embodiments of the present disclosure are directed to multi-RAT spectrum sharing. In a solution, a first apparatus receives, from a second apparatus, semi-persistent scheduling, SPS, configuration for multi radio access technology spectrum sharing, MRSS. The SPS configuration is associated with communication between the first apparatus and the second apparatus. The SPS configuration is determined by at least one of the second apparatus or a third apparatus. The first apparatus and the second apparatus are associated with a first RAT, and the third apparatus is associated with a second RAT. Then, the first apparatus performs reception from the second apparatus based on the SPS configuration.

## Description

### FIELD

Various example embodiments of the present disclosure generally relate to the field of telecommunication and in particular, to multi-RAT spectrum sharing.

### BACKGROUND

With the development of communication technology, new radio access technologies (RATs) may gradually supplement or replace the existing RATs. During the process of migration to a new RAT, there may be scenarios where a switch is made between the new RAT and the existing RAT. Thus, radio resources, such as the spectrum, may be shared by multiple RATs.

### SUMMARY

Example embodiments of the present disclosure are directed to methods, devices, apparatuses, computer readable storage medium and computer program for multi radio access technology spectrum sharing (MRSS). In an example solution, a first apparatus receives, from a second apparatus, semi-persistent scheduling (SPS) configuration for MRSS. The SPS configuration is associated with communication between the first apparatus and the second apparatus. The SPS configuration is determined by at least one of the second apparatus or a third apparatus. The first apparatus and the second apparatus are associated with a first RAT, and the third apparatus is associated with a second RAT. Then, the first apparatus performs reception from the second apparatus based on the SPS configuration.

In another example solution, a second apparatus obtains a SPS configuration for MRSS. The SPS configuration is associated with communication between the first apparatus and the second apparatus, and the SPS configuration is determined by at least one of the second apparatus or a third apparatus. The first apparatus and the second apparatus are associated with a first RAT, and the third apparatus is associated with a second RAT. The second apparatus transmits the SPS configuration to the first apparatus and performs transmission to the first apparatus based on the SPS configuration.

In a further example solution, a third apparatus obtains a SPS configuration for MRSS. The SPS configuration is associated with communication between the first apparatus and the second apparatus, and the SPS configuration is determined by at least one of the second apparatus or a third apparatus. The first apparatus and the second apparatus are associated with a first RAT, and the third apparatus is associated with a second RAT. The third apparatus receives, from the second apparatus, a request for resource coordination for transmitting data from the second apparatus to the first apparatus and transmits, to the second apparatus, a response indicating accepting or rejecting the request.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure may be implemented;
FIG. 2 illustrates a further example communication environment in which example embodiments of the present disclosure may be implemented;
FIG. 3 illustrates an example signaling diagram for the coordination of resources between 5G and 6G;
FIG. 4 illustrates a signaling flow of an example process for DL transmission in accordance with some example embodiments of the present disclosure;
FIG. 5 illustrates a schematic diagram of the time-frequency resources allocated for DL transmission with the first RAT and the second RAT in accordance with some example embodiments of the present disclosure;
FIG. 6 illustrates a schematic diagram of performing DL transmissions based on SPS configuration in accordance with some example embodiments of the present disclosure;
FIG. 7 illustrates an example signaling flow of an example process for DL transmission in accordance with some example embodiments in the present disclosure;
FIG. 8 illustrates a signaling flow of an example process for UL transmission in accordance with some example embodiments of the present disclosure;
FIG. 9 illustrates a schematic diagram of the time-frequency resources allocated for UL transmission with the first RAT and the second RAT in accordance with some example embodiments of the present disclosure;
FIG. 10 illustrates a schematic diagram of performing UL transmissions based on SPS configuration in accordance with some example embodiments of the present disclosure;
FIG. 11 illustrates an example signaling flow of an example process for UL transmission in accordance with some example embodiments in the present disclosure;
FIG. 12 illustrates a flowchart of a method implemented at a first apparatus in accordance with some example embodiments of the present disclosure;
FIG. 13 illustrates a flowchart of a method implemented at a second apparatus in accordance with some example embodiments of the present disclosure;
FIG. 14 illustrates a flowchart of a method implemented at a third apparatus in accordance with some example embodiments of the present disclosure;
FIG. 15 illustrates a flowchart of a method implemented at a first apparatus in accordance with some example embodiments of the present disclosure;
FIG. 16 illustrates a flowchart of a method implemented at a second apparatus in accordance with some example embodiments of the present disclosure;
FIG. 17 illustrates a flowchart of a method implemented at a third apparatus in accordance with some example embodiments of the present disclosure;
FIG. 18 illustrates a simplified block diagram of a device that is suitable for implementing example embodiments of the present disclosure; and
FIG. 19 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein may be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture includes a Centralized Unit (CU) and a Distributed Unit (DU) at an IAB donor node. An IAB node includes a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of a WAB node or an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

As mentioned above, during the process of migration to a new RAT, there may be scenarios where a switch is made between the new RAT and the existing RAT. Radio resources, such as the spectrum, may be shared by multiple RATs.

Dynamic Spectrum Sharing (DSS) has been applied in multi-RAT scenarios where 4G and 5G coexist. DSS may allow for the dynamic allocation of spectrum resources between 4G and 5G according to the network conditions, enabling operators to adjust the allocation of spectrum resources in real time to meet the ever-changing traffic demands. DSS may also include mechanisms to ensure the coexistence of 4G and 5G in the same frequency band, which may minimize interference and optimize performance. When both 4G and 5G services are deployed in the same frequency band, DSS may support carrier aggregation. For DSS, the radio resource control (RRC) protocol includes procedures for the dynamic allocation of spectrum resources between 4G and 5G. This involves signaling interaction between the UE and the network to adjust the resource allocation. Based on the application of DSS, the UE may be enabled to smoothly switch between 4G and 5G services without noticeable interruptions. However, one of the drawbacks of DSS may be its limited capability of dynamically managing the spectrum.

MRSS may be applied to migration from 5G to 6G. A 6G system may operate on different spectrum resources, such as Frequency Range 1 (FR1, below 6 GHz), Frequency Range 2 (FR2, 24 GHz to 52 GHz), and Frequency Range 3 (FR3, 7 GHz to 24 GHz), and gradually occupy the spectrum previously used by 5G NR. MRSS may enable the sharing of spectrum resources between 5G and 6G, that is, the network may utilize a mechanism to enable 5G and 6G to operate synchronously using the same frequency band. However, due to the switches between 5G and 6G, a large amount of overhead may be incurred in the transmission of control signaling and Reference Signals (RS). It may be a challenge to achieve the spectrum sharing between 5G and 6G without having an impact on the performance of UEs, whether it is for existing 5G UEs or newly added 6G UEs to the network.

According to example embodiments of the present disclosure, solutions are proposed to configure a terminal device associated with a first RAT (e.g., a 6G UE) with SPS configuration for MRSS. The SPS configuration is determined by at least one of a network device associated with the first RAT (e.g., a 6G NB) or a further network device associated with a second RAT (e.g., a 5G gNB). Then, the terminal device communicates with the network device associated with the first RAT based on the SPS configuration.

With the solutions in the example embodiment of the present disclosure, the terminal device is enabled to communicate with the network device without RRC re-configuration for each communication. The spectrum may be shared by the first RAT and second RAT without a large amount of signaling overhead. Thus, the spectrum may be managed dynamically, and the communication quality may be improved in the multi-RAT scenarios.

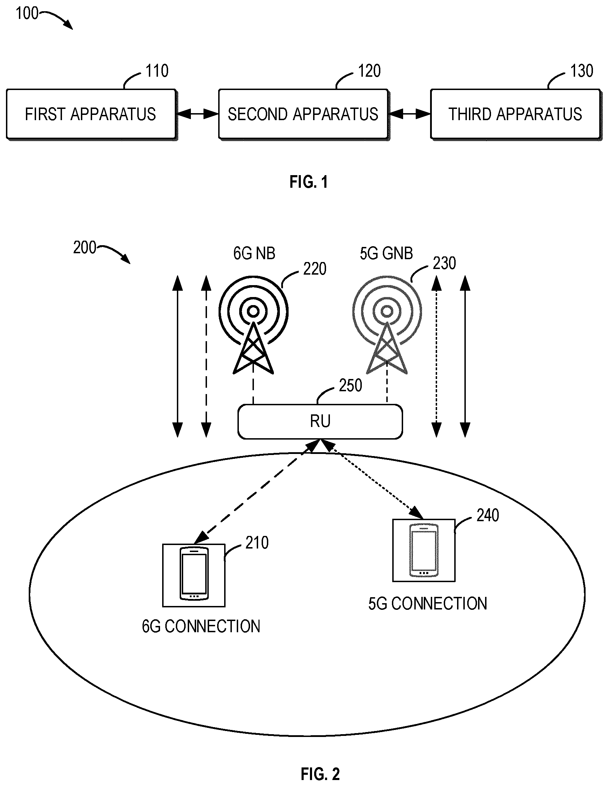

FIG. 1 illustrates an example communication environment 100 in which example embodiments of the present disclosure may be implemented. The communication environment 100 is related to a scenario of MRSS among different RATs, e.g., a first RAT, a second RAT, and so on. In an example, the first RAT may be used for, for example, communication in 5G NR, and the second RAT may be used for communication in, for example, the next generation to 5G NR, e.g., 6G. As an alternative, the first RAT may be used for the communication in the next generation to 5G NR (i.e., 6G), and the second RAT may be used for the communication in the 5G NR.

It is to be understood that the number and types of RATs involved in the communication environment 100 are only for the purpose of illustration without suggesting any limitation. Besides 5G and 6G, the first RAT and the second RAT may also be other RATs. In addition to the first RAT and the second RAT, a third RAT and even more possible RATs may also share the same spectrum resources.

In the communication environment 100, a plurality of communication devices, including a first apparatus 110, a second apparatus 120 and a third apparatus 130, may communicate with each other. In the example of FIG. 1, the first apparatus 110 may be a terminal device associated with a first RAT, i.e., a 6G UE. The second apparatus 120 may be a network device associated with the first RAT, i.e., a 6G NB. The third apparatus 130 may be a further network device associated with a second RAT, i.e., a 5G gNB. The first RAT and the second RAT may share the same spectrum resources.

In some example embodiments, the first apparatus 110 may be associated with both the first RAT and the second RAT. According to the communication condition, the first apparatus 110 may communicate with the second apparatus 120 based on the first RAT or communicate with the third apparatus 130 based on the second RAT.

In the following, for the purpose of illustration, some example embodiments are described with the first apparatus 110 operating as a 6G UE, the second apparatus 120 operating as a 6G NB and the third apparatus 130 operating as a 5G gNB.

In some example embodiments, the second apparatus 120 and the third apparatus 130 may be co-located and belong to the same vendor. Alternatively, in some example embodiments, the second apparatus 120 and the third apparatus 130 may belong to different vendors and share the same radio unit (RU). The multi-vendor approach may be preferred by operators who do not prefer to remain with the same 5G vendor also for 6G, allowing them more flexibility to switch vendor and avoiding vendor lock-in.

In multi-vendor scenarios, the second apparatus 120 and the third apparatus 130 may communicate with an inter-RAT interface used to coordinate operations between sperate schedulers. In some examples, the inter-RAT interface may be similar to an inter-DU interface in the Open Radio Access Network (O-RAN). Alternatively, or in addition, in some examples, the inter-RAT interface may be an Xn interface and used for inter-RAT signalling. Overall, there could be different interfaces for inter-RAT coordination and their usage may depend by the latency and complexity required for the inter-RAT coordination.

In some example embodiments, a transmission direction from the second apparatus 120 to the first apparatus 110 is referred to as a downlink (DL), while a transmission direction from the first apparatus 110 to the second apparatus 120 is referred to as an uplink (UL). In DL, the second apparatus 120 is a transmitting (TX) device (or a transmitter) and the first apparatus 110 is a receiving (RX) device (or a receiver). In UL, the first apparatus 110 is a TX device (or a transmitter) and the second apparatus 120 is a RX device (or a receiver).

Communications in the communication environment 100 may be implemented according to any proper communication protocol(s), including, but not limited to, cellular communication protocols, wireless local network communication protocols such as Institute for Electrical and Electronics Engineers (IEEE) 802.11 and the like, and/or any other protocols currently known or to be developed in the future. Moreover, the communication may utilize any proper wireless communication technology, including but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

FIG. 2 illustrates a further example communication environment 200 in which example embodiments of the present disclosure may be implemented. Communication environment 200 may be taken as an example of communication environment 100. Communication environment 200 may involve a 6G UE 210, a 6G NB 220, a 5G gNB 230 and a 5G UE 240. The 6G NB 220 and the 5G gNB 230 may belong to different vendors and share the same RU 250. In communication environment 200, communication between the 6G UE 210 and the 6G NB 220, as well as communication between the 5G gNB 230 and the 5G UE 240, may share the same resources.

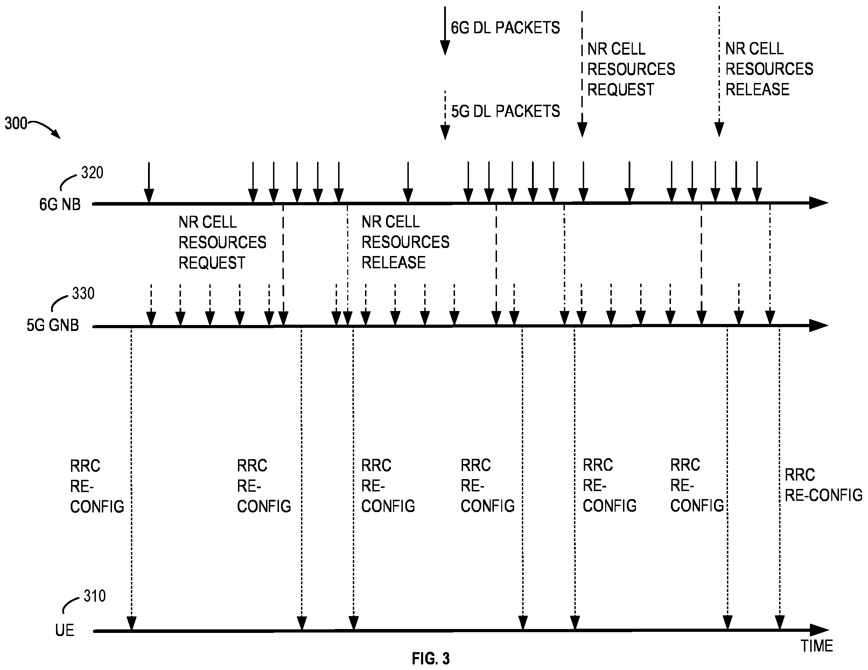

In the traditional approach, network devices associated with different RATs may coordinate resources through an interface and/or over-the-air (OTA) signaling transmission for each DL/UL transmission. This may lead to significant signaling complexity and additional overhead. FIG. 3 illustrates an example signaling diagram for the coordination of resources between 5G and 6G.

As shown in FIG. 3, 5G and 6G may share the same resource. When there are 5G DL packets to be transmitted to the UE 310, the 5G gNB 330 may transmit an RRC re-configuration to the UE 310, configuring the shared resource for 5G communication. When there are 6G DL packets to be transmitted to the UE 310, the 6G NB 320 may transmit a signaling indicating a resource request to the 5G gNB 330, requesting to coordinate the shared resource for 6G communication. In response to the signaling, the 5G gNB 330 may transmit an RRC re-configuration to the UE 310, configuring the shared resource for 6G communication. After the 6G DL packets are transmitted, the 6G NB 320 may transmit a further signaling indicating resource release to the 5G gNB 330. Thus, due to the frequent switching between 5G and 6G communications, a large amount of signaling overhead may be incurred for resource coordination.

In a 5G network, most services, such as Voice over Internet Protocol (VoIP), web browsing, video streaming, etc., may exhibit DL bursty behavior. This bursty behavior may be characterized by a period of high data transmission followed by a period of low or no data transmission. Similarly, in other services, such as video calls and gaming, bursty traffic may occur in both DL and UL directions. It is expected that at least in the initial stage of 6G development, the 6G services may show bursty characteristics similar to those of 5G. Therefore, when addressing the resource coordination issues between 5G and 6G, the bursty behavior may need to be taken into account.

Considering the above factors, the main concept of this solution is to configure a terminal device associated with a first RAT with SPS configuration for MRSS. Based on the SPS configuration, the terminal device may be enabled to communicate with the network device associated with the first RAT without additional signaling overhead.

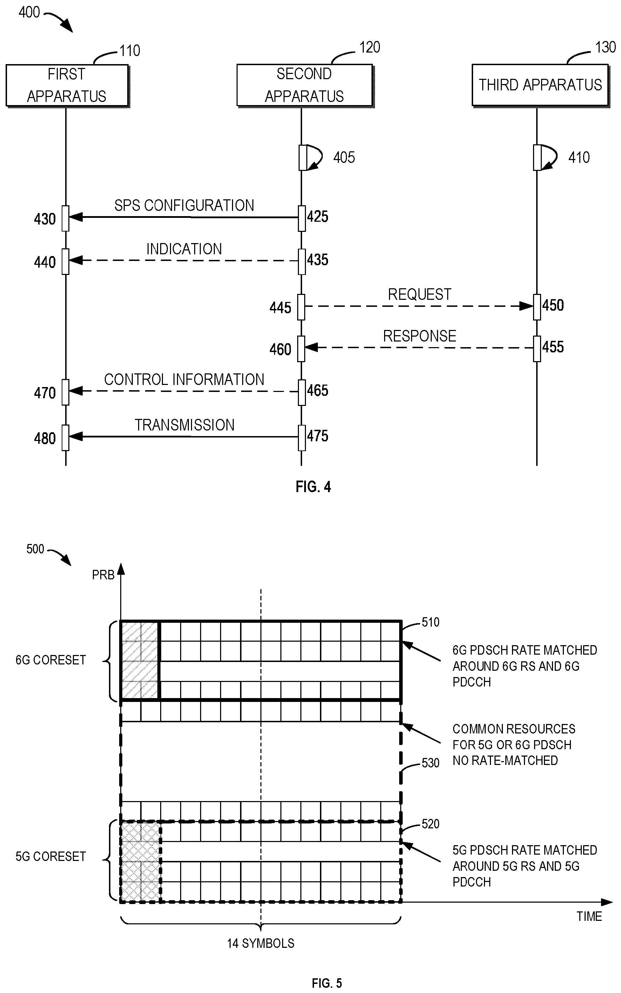

Some example processes are now described. FIG. 4 illustrates a signaling flow 400 of an example process for DL transmission according to some example embodiments of the present disclosure. As illustrated in FIG. 4, the signaling flow 400 involves the first apparatus 110, the second apparatus 120 and the third apparatus 130, as shown in FIG. 1. The first apparatus 110 and the second apparatus 120 may be associated with a first RAT. The third apparatus 130 may be associated with a second RAT. The example embodiments of FIG. 4 may be illustrated by taking 6G as an example of the first RAT and 5G as an example of the second RAT. It is to be understood that this is just an example and does not suggest any limitations. In some other example embodiments, 5G may be taken as an example of the first RAT and 6G may be taken as an example of the second RAT.

In the following description, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

As shown in FIG. 4, the second apparatus 120 obtains (405) a SPS configuration for MRSS. The third apparatus 130 also obtains (410) the SPS configuration for MRSS. The SPS configuration is associated with the communication between the first apparatus 110 and the second apparatus 120. For example, the SPS configuration may include at least a configuration for DL transmission from the second apparatus 120 to the first apparatus 110.

The SPS configuration may be determined by either the second apparatus 120 or the third apparatus 130, or both of them. In the example embodiments where the second apparatus 120 acts as the primary node for resource allocation, the second apparatus 120 may determine the SPS configuration and transmit the SPS configuration to the third apparatus 130. Alternatively, in the example embodiments where the third apparatus 130 acts as the primary node for resource allocation, the third apparatus may determine the SPS configuration and transmit the SPS configuration to the second apparatus 120. The SPS configuration may be determined based on associated conditions of the first RAT and the second RAT, e.g., service characteristics, network loads, traffic types, etc.

Based on the above process, the second apparatus 120 associated with the first RAT and the third apparatus 130 associated with the second RAT may have a common understanding of the SPS configuration. Thus, communication based on the first RAT and communication based on the second RAT may share the same resources.

In some example embodiments, the SPS configuration may include SPS resources allocated for the first RAT and the second RAT. For example, the SPS configuration may include a first set of time-frequency resources for the first RAT, a second set of time-frequency resources for the second RAT and a third set of time-frequency resources common to the first and second RATs.

In addition, the SPS configuration may include a traffic direction of the resources, indicating the resources are used for DL transmission, UL transmission or both. For example, the SPS configuration may include a first traffic direction of the first set of time-frequency resources, a second traffic direction of the second set of time-frequency resources and a third traffic direction of the third set of time-frequency resources. In the example embodiments related to DL transmission, each of the first traffic direction, the second traffic direction and the third traffic direction may be DL.

FIG. 5 illustrates a schematic diagram of the time-frequency resources allocated for DL transmission with the first RAT and the second RAT. As shown in FIG. 5, the resources shared by the first RAT and the second RAT may be divided into three parts, that is, the first set of time-frequency resources 510 for the first RAT, the second set of time-frequency resources 520 for the second RAT, and the third set of time-frequency resources 530 common to the first and second RATs.

The primary node for resource allocation may have a large number of bandwidth (BW) resources to manage and may dedicate some of the BW resources to MRSS.

In some example embodiments, assuming a 100 PRB BW configuration and a time domain allocation occupying the first two OFDM symbols of the subframe, the first set of time-frequency resources 510 (e.g., a 6G control resource set, 6G CORESET) may be configured with a frequency domain resource allocation occupying the last part of the BW, e.g., from PRB 76 to PRB 100. In some examples, the first set of time-frequency resources 510 may be used for 6G Physical Downlink Control Channel (PDCCH) transmission. As an alternative, or addition, the first set of time-frequency resources 510 may be used for 6G RS resources transmission, e.g., 6G Synchronization Signal Block (SSB) transmission or 6G Channel State Information Reference Signal (CSI-RS) transmission. As a further alternative, or addition, the first set of time-frequency resources 510 may be used for 6G Physical Downlink Shared Channel (PDSCH) transmission. In some example embodiments, considering that the specific positions of the first set of time-frequency resources 510 may be occupied by 6G PDCCH and 6G RS, rate matching of the 6G PDSCH may be performed around the resource elements (REs) occupied by 6G RS and 6G PDCCH in the first set of time-frequency resources 510 so that the 6G PDSCH may not be overlapping to these positions.

In some example embodiments, the second set of time-frequency resources 520 (e.g., a 5G control resource set, 5G CORESET) may be configured with a frequency domain resource allocation occupying the first part of the BW, e.g., from PRB 1 to PRB 24, assuming 100 PRB BW configuration, and a time domain allocation occupying the first two OFDM symbols of the subframe. In some examples, the second set of time-frequency resources 520 may be used for 5G PDCCH transmission. As an alternative, or addition, the second set of time-frequency resources 520 may be used for 5G RS resources transmission, e.g., 5G SSB transmission or 5G CSI-RS transmission. As a further alternative, or addition, the second set of time-frequency resources 520 may be used for 5G PDSCH transmission. In some example embodiments, considering that the specific positions of the second set of time-frequency resources 520 may be occupied by 5G PDCCH and 5G RS, rate matching of the 5G PDSCH may be performed around the REs occupied by 5G RS and 5G PDCCH in the second set of time-frequency resources 520 so that the 5G PDSCH may not be overlapping to these positions.

In some example embodiments, the third set of time-frequency resources 530 (e.g., common resources for 5G PDSCH and 6G PDSCH) may be allocated between the first set of time-frequency resources 510 and the second set of time-frequency resources 520, e.g., from PRB 25 to PRB 75, assuming a 100 PRB BW configuration. During each SPS occasion, 5G PDSCH and/or 6G PDSCH may be scheduled in the third set of time-frequency resources 530. No rate matching is to be performed on 5G PDSCH and/or 6G PDSCH scheduled on the third set of time-frequency resources 530 as symbols and PRBs may not be occupied by other 5G or 6G transmissions like PDCCH and RS transmissions.

It is to be understood that the resource allocation above is only for the purpose of illustration without suggesting any limitation. Resources may also be allocated to the first RAT and the second RAT in other possible ways.

Alternatively, or in addition, the SPS configuration may include at least one of the following: a SPS period, a starting time for DL transmission, a first frequency domain resource offset of the first set of time-frequency resources, a second frequency domain resource offset of the second set of time-frequency resources, or a third frequency domain resource offset of the third set of time-frequency resources. The SPS period may represent the repetition interval of SPS resources and indicate how many time units (e.g., time slots) the first apparatus 110 may automatically receive/transmit data at intervals. The starting time may indicate the time origin of the first SPS resource. The first, second and third frequency domain resource offsets may respectively indicate the starting positions of the first, second and third set of time-frequency resources within the SPS period, which may be used as common resources between multiple RATs.

Continuing with FIG. 4, the second apparatus 120 transmits (425) the SPS configuration to the first apparatus 110. The first apparatus 110 receives (430) the SPS configuration from the second apparatus 120. Based on the received SPS configuration, the first apparatus 110 may get informed of the allocation of SPS resources, the SPS period, the starting time for reception, etc. In some example embodiments, if the SPS configuration is updated by the second apparatus 120 or the third apparatus 130, the second apparatus 120 may transmit the updated SPS configuration to the first apparatus, for example, to increase or decrease the duration of the SPS period.

Then, the second apparatus 120 may transmit (435), to the first apparatus 110, an indication for activating the SPS configuration. The indication may include an L1 or L2 controlling signaling, e.g., PDCCH, carrying a downlink control information (DCI) indicating an SPS activation grant. In some example embodiments, the second apparatus 120 may determine to activate or deactivate the SPS configuration based on a cell-level metric, e.g., considering UL traffic reports from multiple UEs and/or considering DL buffer status for multiple UEs. For DL transmission, the second apparatus 120 and/or the third apparatus 130 may monitor DL traffic to determine the DL buffer status, e.g., the number of DL packets awaiting transmission. The first apparatus 110 may receive (440) the indication from the second apparatus 120 and activate the SPS configuration.

At each SPS occasion, based on the DL buffer status, the second apparatus 120 and the third apparatus 130 may coordinate to schedule the transmission of 5G DL packets and 6G DL packets. The coordination may be implemented based on interface between the second apparatus 120 and the third apparatus 130 or OTA signaling.

In example embodiments where the third apparatus 130 acts as the coordinator, if there is data to be transmitted to the first apparatus 110, the second apparatus 120 may transmit (445), to the third apparatus 130, a request for resource coordination for transmitting the data. The request may include a status of a buffer containing the data to be transmitted. The third apparatus 130 may receive (450) the request and determine whether to accept the request. Then, the third apparatus 130 may transmit (455), to the second apparatus 120, a response indicating accepting or rejecting the request. The second apparatus 120 may receive (460) the response.

If the request is accepted by the third apparatus 130, the second apparatus 120 may transmit (465), to the first apparatus 110, control information indicating that the DL transmission is to be scheduled on at least one subsequent SPS occasion. For example, the control information may be DCI or other suitable information for controlling. The first apparatus 110 may receive (470) the control information, and may be aware that the DL transmission is to be scheduled on at least one subsequent SPS occasion. Then, the second apparatus 120 performs (475) the transmission to the first apparatus 110, that is, transmits data to the first apparatus 110. Correspondingly, the first apparatus 110 performs (480) reception based on the SPS configuration. That is, the first apparatus 110 receives the data from the second apparatus 120.

On the other hand, if the request is not accepted by the third apparatus 130, the second apparatus 120 may transmit, to the first apparatus 110, control information indicating that the DL transmission is not to be scheduled on at least one subsequent SPS occasion.

Alternatively, in example embodiments where the second apparatus 120 acts as the coordinator, if there is data to be transmitted to the first apparatus 110, the second apparatus 120 may not transmit (445) the request for resource coordination to the third apparatus 130 and determine whether to schedule the DL transmission on the at least one subsequent occasion by itself.

In example embodiments where the DL transmission on the at least one subsequent occasion is contention-based, there may also be no need to transmit the request for resource coordination to the third apparatus 130, as the SPS resources are shared by the first RAT and the second RAT based on dynamic contention rather than coordination.

In some example embodiments, the control information may further indicate whether the DL transmission on the at least one SPS occasion is contention-free or contention-based. As described above, contention-based transmission may indicate that the second apparatus 120 and the third apparatus 130 may attempt to occupy the SPS resources without coordination. Contention-free transmission may indicate that the SPS resources are dedicated to the first RAT on the at least one SPS occasion.

In the example embodiments where the DL transmission from the second apparatus 120 to the first apparatus 110 is contention-based, the second apparatus 120 may transmit a further configuration to the first apparatus 110 for supporting the contention-based transmission. For example, the further configuration may include an update of the Modulation and Coding Scheme (MCS) of the first apparatus 110. Specifically, the MCS value of the first apparatus 110 may be decreased to improve the robustness of the reception from the second apparatus 120, to better handle the interference caused by the second RAT. As an alternative, or addition, the further configuration may include an activation indication of cross-RAT interference cancellation. Based on the cross-RAT interference cancellation, the interference caused by the second RAT may be decreased. As a further alternative, or addition, the further configuration may include an indication to switch beams to improve spatial separation between the beams for the first and second RATs transmissions.

Alternatively, or in addition, in some example embodiments, the second apparatus 120 may update the DL transmission power to decrease the interference.

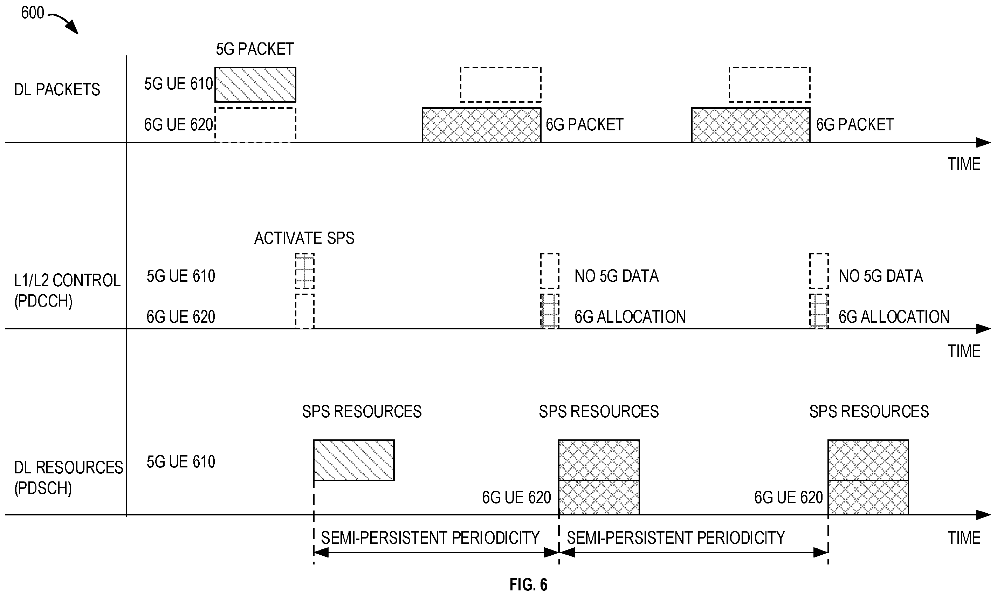

FIG. 6 illustrates a schematic diagram 600 of performing DL transmissions based on SPS configuration. The diagram 600 involves a 5G UE 610 and a 6G UE 620. The 6G UE 620 may be taken as an example of the first apparatus 110.

As shown in FIG. 6, the 5G UE 610 may receive a 5G packet, followed by a period of no reception. The 6G UE 620 may first have a period of no reception and then receive 6G packets. That is to say, both the 5G UE 610 and the 6G UE 620 may face bursty DL traffic. L1/L2 control signaling (e.g., PDDCH) may activate the SPS configuration for the 5G UE 610 and the 6G UE 620. In the example shown in FIG. 6, for the first SPS occasion, control information (e.g., PDDCH) transmitted to the 5G UE 610 may indicate that the SPS resources may be used for 5G DL data transmission. For the second and third occasions, the control information (e.g., PDCCH) transmitted to the 6G UE 620 may indicate that the SPS resources may be used for 6G DL data transmission. Then, on the first SPS occasion, the 5G UE 610 may use the SPS resources to receive the 5G packet. For example, the 5G UE 610 may use resources dedicated to 5G and/or resources common to 5G and 6G. On the second and third SPS occasions, the 6G UE 620 may use the SPS resources to receive the 6G packets. For example, the 6G UE 620 may use resources dedicated to 6G and/or resources common to 5G and 6G.

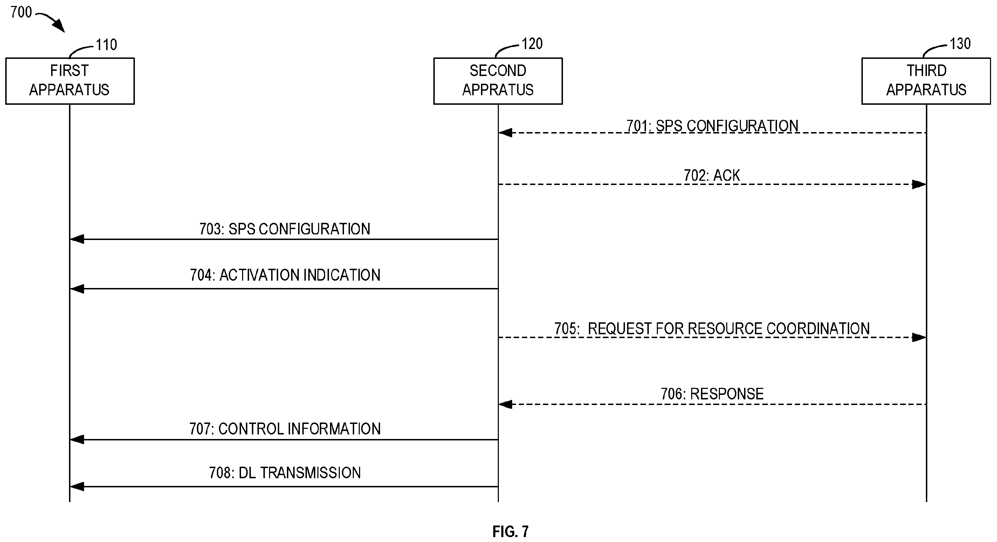

FIG. 7 illustrates an example signaling flow 700 of an example process for DL transmission in accordance with some example embodiments in the present disclosure. The signaling flow 700 may be considered as an example embodiment of the signaling flow 400 of FIG. 4. The signaling flow 700 involves the first apparatus 110, the second apparatus 120 and the third apparatus 130.

As shown in FIG. 7, at 701, the third apparatus 130 may transmit SPS configuration for MRSS to the second apparatus 120. For example, the SPS configuration may be for 5G and 6G spectrum sharing. At 702, the second apparatus 120 may transmit an acknowledge (ACK) to the SPS configuration. The SPS configuration may include the SPS resources, the traffic directions, the SPS period, the starting time, the resource offsets, etc.

Then, at 703, the second apparatus 120 may transmit the SPS configuration to the first apparatus 110. At 704, the second apparatus 120 may transmit an indication for activating the SPS configuration to the first apparatus 110. For example, the indication may include an L1 or L2 control signaling, e.g., PDCCH, carrying a DCI indicating an SPS activation grant.

At 705, if there is data to be transmitted to the first apparatus 110, the second apparatus 120 may transmit, to the third apparatus 130, a request for resource coordination for transmitting the data. The request may include a status of a buffer containing the data to be transmitted. The third apparatus 130 may determine whether to accept or to reject the request. At 706, the third apparatus 130 may transmit, to the second apparatus 120, a response indicating accepting or rejecting the request.

At 707, if the request is accepted by the third apparatus 130, the second apparatus 120 may transmit, to the first apparatus 110, control information indicating that the DL transmission from the second apparatus 120 to the first apparatus 110 is to be scheduled on at least one subsequent SPS occasion. At 708, the second apparatus 120 may perform transmission and the first apparatus 110 may perform reception based on the SPS configuration.

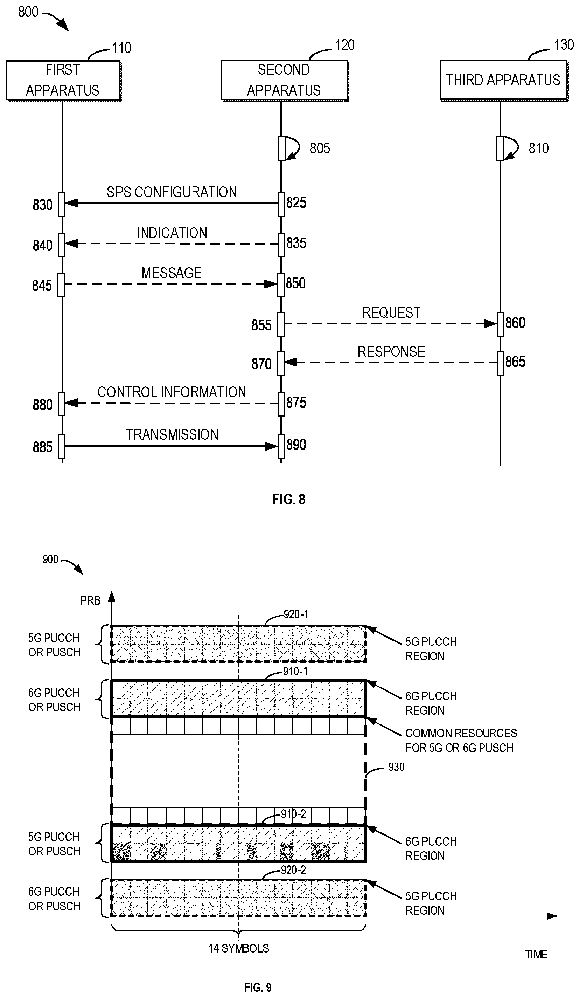

FIG. 8 illustrates a signaling flow 800 of an example process for UL transmission according to some example embodiments of the present disclosure. As illustrated in FIG. 8, the signaling flow 800 involves the first apparatus 110, the second apparatus 120 and the third apparatus 130, as shown in FIG. 1. The first apparatus 110 and the second apparatus 120 may be associated with a first RAT. The third apparatus 130 may be associated with a second RAT. The example embodiments of FIG. 4 may be illustrated by taking 6G as an example of the first RAT and 5G as an example of the second RAT. It is to be understood that this is just an example and does not suggest any limitations. In some other example embodiments, 5G may be taken as an example of the first RAT and 6G may be taken as an example of the second RAT.

As shown in FIG. 8, the second apparatus 120 obtains (805) a SPS configuration for MRSS. The third apparatus 130 also obtains (810) the SPS configuration for MRSS. The SPS configuration is associated with the communication between the first apparatus 110 and the second apparatus 120. For example, the SPS configuration may include at least a configuration for UL transmission from the first apparatus 110 to the second apparatus 120.

The SPS configuration is determined by at least one of the second apparatus 120 or the third apparatus 130. In the example embodiments where the second apparatus 120 acts as the primary node for resource allocation, the second apparatus 120 may determine the SPS configuration and transmit the SPS configuration to the third apparatus 130. Alternatively, in the example embodiments where the third apparatus 130 acts as the primary node for resource allocation, the third apparatus may determine the SPS configuration and transmit the SPS configuration to the second apparatus 120. The SPS configuration may be determined based on associated conditions of the first RAT and the second RAT, e.g., service characteristics, network load, traffic types, etc.

Based on the above process, the second apparatus 120 associated with the first RAT and the third apparatus 130 associated with the second RAT may have a common understanding of the SPS configuration. Thus, communication based on the first RAT and communication based on the second RAT may share the same resources.

In some example embodiments, the SPS configuration may include SPS resources allocated for the first RAT and the second RAT. For example, the SPS configuration may include a first set of time-frequency resources for the first RAT, a second set of time-frequency resources for the second RAT and a third set of time-frequency resources common to the first and second RATs.

In addition, the SPS configuration may include a traffic direction of the resources, indicating the resources are used for DL transmission, UL transmission or both. For example, the SPS configuration may include a first traffic direction of the first set of time-frequency resources, a second traffic direction of the second set of time-frequency resources and a third traffic direction of the third set of time-frequency resources. In the example embodiments related to UL transmission, each of the first traffic direction, the second traffic direction and the third traffic direction may be UL.

FIG. 9 illustrates a schematic diagram of the time-frequency resources allocated for UL transmission with the first RAT and the second RAT. As shown in FIG. 9, the resources shared by the first RAT and the second RAT may be divided into three parts, that is, the first set of time-frequency resources 910-1 and 910-2 for the first RAT, the second set of time-frequency resources 920-1 and 920-2 for the second RAT, and the third set of time-frequency resources 930 common to the first and second RATs.

Specifically, the upper part of the BW and the lower part of the BW may be reserved for 5G UL transmission. Similarly, another discontinuous BW may be reserved for 6G UL transmission. In the middle part of the BW, there may be common resources allocated to both 5G and 6G UL transmission. In some example embodiments, no rate matching may be performed on 5G PDSCH and/or 6G PDSCH scheduled on the third set of time-frequency resources 930, as symbols and PRBs may not be occupied by PDCCH and RS transmissions.

It is to be understood that the resource allocation above is only for the purpose of illustration without suggesting any limitation. Resources may also be allocated to the first RAT and the second RAT in other possible ways.

Alternatively, or in addition, the SPS configuration may include at least one of the following: a SPS period, a starting time for the UL transmission, a first frequency domain resource offset of the first set of time-frequency resources, a second frequency domain resource offset of the second set of time-frequency resources, or a third frequency domain resource offset of the third set of time-frequency resources. The SPS period may represent the repetition interval of SPS resources and indicate how many time units (e.g., time slots) the first apparatus 110 may automatically receive/transmit data at intervals. The starting time may indicate the time origin of the first SPS resource. The first, second and third frequency domain resource offsets may respectively indicate the starting positions of the first, second and third set of time-frequency resources within the SPS period, which may be used as common resources between multiple RATs.

Continuing with FIG. 8, the second apparatus 120 transmits (825) the SPS configuration to the first apparatus 110. The first apparatus 110 receives (830) the SPS configuration from the second apparatus 120. Based on the received SPS configuration, the first apparatus 110 may get informed of the allocation of SPS resources, the SPS period, the starting time for transmission, etc. In some example embodiments, if the SPS configuration is updated by the second apparatus 120 or the third apparatus 130, the second apparatus 120 may transmit the updated SPS configuration to the first apparatus, for example, to increase or decrease the duration of the SPS period.

Then, the second apparatus 120 may transmit (835), to the first apparatus 110, an indication for activating the SPS configuration. In some example embodiments, the second apparatus 120 may determine to activate or deactivate the SPS configuration based on a cell-level metric, e.g., considering UL traffic reports from multiple UEs and/or considering DL buffer status for multiple UEs. The first apparatus 110 may receive (840) the indication from the second apparatus 120 and activate the SPS configuration.

In some example embodiments, the first apparatus 110 may transmit (845), to the second apparatus 120, a message indicating data to be transmitted from the first apparatus 110 to the second apparatus 120. That is to say, the first apparatus 110 may inform the second apparatus 120 the UL buffer status. For example, the message may include a buffer status report, BSR. Alternatively, or in addition, the message may include user equipment assistance information, UAI. The second apparatus 120 may receive (850) the message from the first apparatus 110 to get inform that there is data to be transmitted from the first apparatus 110 to the second apparatus 120.

At each SPS occasion, based on the UL buffer status, the second apparatus 120 and the third apparatus 130 may coordinate to schedule the transmission of 5G UL packets and 6G UL packets. The coordination may be implemented based on interface between the second apparatus 120 and the third apparatus 130 or OTA signaling.

In example embodiments where the third apparatus 130 acts as the coordinator, if there is data to be transmitted from the first apparatus 110 to the second apparatus 120, the second apparatus 120 may transmit (855), to the third apparatus 130, a request for resource coordination for receiving the UL data. The request may include a status of a buffer containing the data to be transmitted from the first apparatus 110 to the second apparatus 120. The third apparatus 130 may receive (860) the request and determine whether to accept the request. Then, the third apparatus 130 may transmit (865), to the second apparatus 120, a response indicating accepting or rejecting the request. The second apparatus 120 may receive (870) the response.

If the request is accepted by the third apparatus 130, the second apparatus 120 may transmit (875), to the first apparatus 110, control information indicating that the UL transmission is to be scheduled on at least one subsequent SPS occasion. For example, the control information may be DCI. The first apparatus 110 may receive (880) the control information. Then, the first apparatus 110 performs (885) transmission and the second apparatus 120 performs (890) reception based on the SPS configuration.

If the request is not accepted by the third apparatus 130, the second apparatus 120 may transmit, to the first apparatus 110, control information indicating that the UL transmission is not to be scheduled on at least one subsequent SPS occasion.

Alternatively, in example embodiments where the second apparatus 120 acts as the coordinator, if there is data to be transmitted from the first apparatus 110 to the second apparatus 120, the second apparatus 120 may not transmit (855) the request for resource coordination to the third apparatus 130. Instead, in this case, the second apparatus 120 determine whether to schedule the UL transmission on the at least one subsequent occasion by itself.

In example embodiments where the UL transmission on the at least one subsequent occasion is contention-based, there may also be no need to transmit the request for resource coordination to the third apparatus 130, as the SPS resources are shared by the first RAT and the second RAT based on dynamic contention rather than coordination.

In some example embodiments, the control information may further indicate whether the UL transmission on the at least one SPS occasion is contention-free or contention-based. As described above, contention-based transmission may indicate that the second apparatus 120 and the third apparatus 130 may attempt to occupy the SPS resources without coordination. Contention-free transmission may indicate that the SPS resources are dedicated to the first RAT on the at least one SPS occasion.

In the example embodiments where the UL transmission from the second apparatus 120 to the first apparatus 110 is contention-based, the second apparatus 120 may transmit a further configuration to the first apparatus 110 for supporting the contention-based transmission. For example, the further configuration may include an update of the MCS of the first apparatus 110. Specifically, the MCS value of the first apparatus 110 may be decreased to improve the robustness of the transmission to the second apparatus 120, to better handle the interference caused by the second RAT. Alternatively, or in addition, the further configuration may include an update of the UL transmission power of the first apparatus 110. The first apparatus 110 may decrease the UL transmission power to decrease the interference caused by the second RAT. As an alternative, or addition, the further configuration may include an activation indication of cross-RAT interference cancellation. Based on the cross-RAT interference cancellation, the interference caused by the second RAT may be decreased. As a further alternative, or addition, the further configuration may include an indication to switch beams to improve spatial separation between the beams for the first and second RATs transmissions.

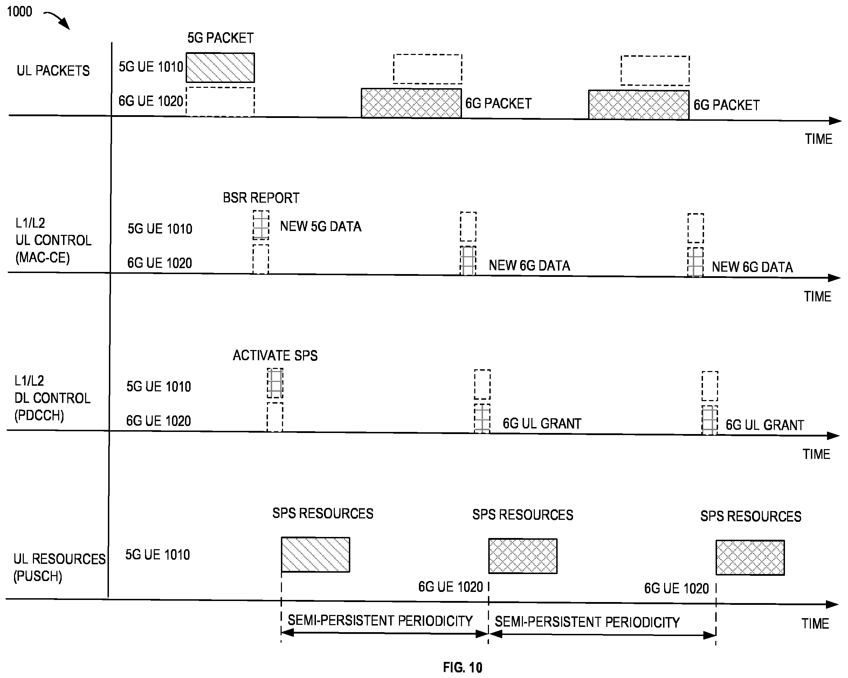

FIG. 10 illustrates a schematic diagram 1000 of performing UL transmissions based on SPS configuration. The diagram 1000 involves a 5G UE 1010 and a 6G UE 1020. The 6G UE 1020 may be taken as an example of the first apparatus 110.

As shown in FIG. 10, the 5G UE 1010 may transmit a 5G packet, followed by a period of no transmission. The 6G UE 1020 may first have a period of no transmission and then transmit 6G packets. That is to say, both the 5G UE 1010 and the 6G UE 1020 may face bursty DL traffic. Then, the 5G UE 1010 and 6G UE 1020 may transmit a message (e.g., a BSR report) indicating the packets to be transmitted to the corresponding network device. The message may be transmitted via L1/L2 control signaling, e.g., Media Access Control-Control Element (MAC-CE). The BSR for 5G may indicate that new 5G data (i.e., the 5G packet) is to be transmitted. The BSR for 6G may indicate new 6G data (i.e., the 6G packet) is to be transmitted.

L1/L2 control signaling (e.g., PDDCH) may activate the SPS configuration for the 5G UE 1010 and the 6G UE 1020. In the example shown in FIG. 10, for the first SPS occasion, control information (e.g., PDDCH) transmitted to the 5G UE 1010 may indicate that the SPS resources may be used for 5G UL data transmission. For the second and third occasions, the control information (e.g., PDCCH) transmitted to the 6G UE 1020 may indicate that the SPS resources may be used for 6G UL data transmission. Then, on the first SPS occasion, the 5G UE 1010 may use the SPS resources to transmit the 5G packet. For example, the 5G UE 1010 may use resources dedicated to 5G and/or resources common to 5G and 6G. On the second and third SPS occasions, the 6G UE 620 may use the SPS resources to transmit the 6G packets. For example, the 6G UE 1020 may use resources dedicated to 6G and/or resources common to 5G and 6G.

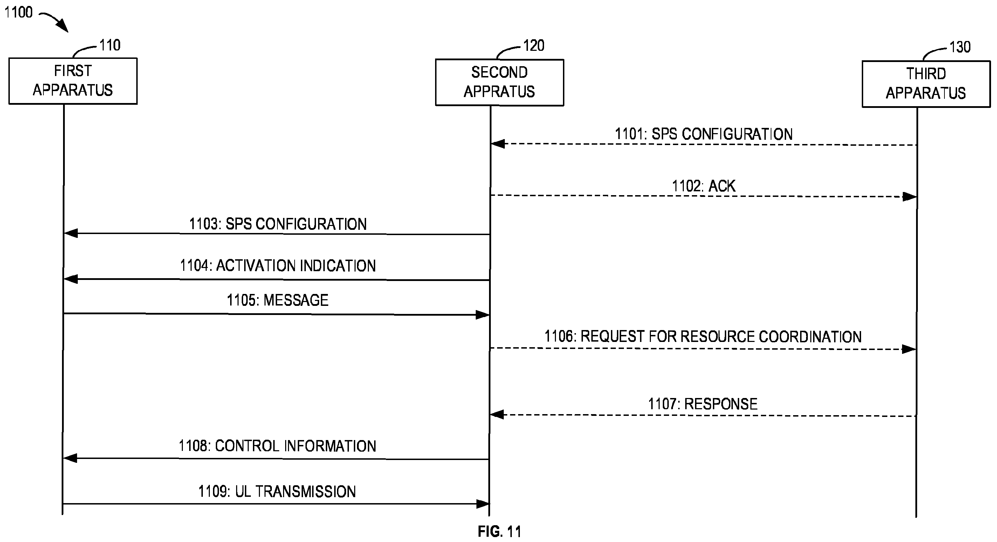

FIG. 11 illustrates an example signaling flow 1100 of an example process for UL transmission in accordance with some example embodiments in the present disclosure. The signaling flow 1100 may be considered as an example embodiment of the signaling flow 800 of FIG. 8. The signaling flow 1100 involves the first apparatus 110, the second apparatus 120 and the third apparatus 130.

As shown in FIG. 11, at 1101, the third apparatus 130 may transmit SPS configuration for MRSS to the second apparatus 120. For example, the SPS configuration may be for 5G and 6G spectrum sharing. At 1102, the second apparatus 120 may transmit an ACK to the SPS configuration. The SPS configuration may include the SPS resources, the traffic directions, the SPS period, the starting time, the resource offsets, etc.

Then, at 1103, the second apparatus 120 may transmit the SPS configuration to the first apparatus 110. At 1104, the second apparatus 120 may transmit an indication for activating the SPS configuration to the first apparatus 110. For example, the indication may include an L1 or L2 control signaling, e.g., PDCCH, carrying a DCI indicating an SPS activation grant. At 1105, the first apparatus 110 may transmit, to the second apparatus 120, a message indicating the data to be transmitted from the first apparatus 110 to the second apparatus 120.

At 1106, if there is data to be transmitted from the first apparatus 110 to the second apparatus 120, the second apparatus 120 may transmit, to the third apparatus 130, a request for resource coordination for receiving the data. The request may include a status of a buffer containing the data to be transmitted from the first apparatus 110 to the second apparatus 120. The third apparatus 130 may determine whether to accept or to reject the request. At 1107, the third apparatus 130 may transmit, to the second apparatus 120, a response indicating accepting or rejecting the request.

At 1108, if the request is accepted by the third apparatus 130, the second apparatus 120 may transmit, to the first apparatus 110, control information indicating that the UL transmission from the second apparatus 120 to the first apparatus 110 is to be scheduled on at least one subsequent SPS occasion. At 1109, the first apparatus 110 may perform transmission and the second apparatus 120 may perform reception based on the SPS configuration.

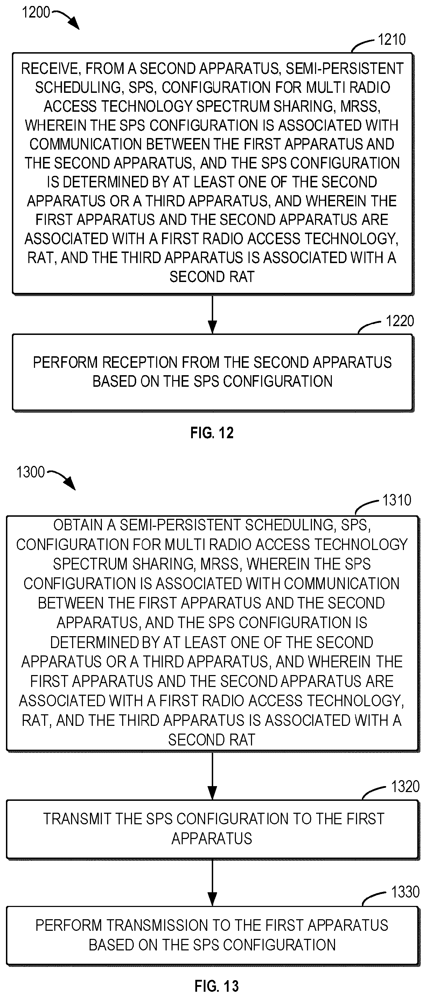

FIG. 12 shows a flowchart of an example method 1200 implemented at a first apparatus in accordance with some example embodiments of the present disclosure. For the purpose of discussion, the method 1200 will be described from the perspective of the first apparatus 110 in FIG. 1.

At block 1210, the first apparatus 110 receives, from a second apparatus, semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT.

At block 1220, the first apparatus 110 performs reception from the second apparatus based on the SPS configuration.

In some example embodiments, the SPS configuration may include at least one of: a first set of time-frequency resources for the first RAT, a second set of time-frequency resources for the second RAT, a third set of time-frequency resources common to the first RAT and the second RAT, a SPS period, a starting time for the reception, a first frequency domain resource offset of the first set of time-frequency resources, a second frequency domain resource offset of the second set of time-frequency resources, a third frequency domain resource offset of the third set of time-frequency resources, a first traffic direction of the first set of time-frequency resources, a second traffic direction of the second set of time-frequency resources, a third traffic direction of the third set of time-frequency resources.

In some example embodiments, each of the first traffic direction, the second traffic direction and the third traffic direction may be downlink, or wherein no rate matching may be performed on the third set of time-frequency resources.

In some example embodiments, the method 100 may further include at least one of: receiving from the second apparatus, an indication for activating the SPS configuration; or receiving, from the second apparatus, control information indicating that the reception is to be scheduled on at least one subsequent SPS occasion, and performing the reception on the at least one subsequent SPS occasion.

In some example embodiments, the method 1200 may further include: in response to that the reception is contention-based, receiving, from the second apparatus, a further configuration for supporting the contention-based reception.

In some example embodiments, the first RAT may be for communication in 5th generation new radio (5G NR), and the second RAT may be for communication in a next generation to 5G NR, or wherein the first RAT may be for communication in the next generation to 5G NR, and the second RAT may be for communication in the 5G NR, or wherein the reception may be performed based on the SPS configuration and a further indication instructing use of SPS resources for a first RAT transmission in contention to a second RAT transmission, or wherein the first apparatus may be or be included in a terminal device, the second apparatus may be or be included in a network device, and the third apparatus is or is included in a further network device.

FIG. 13 shows a flowchart of an example method 1300 implemented at a second apparatus in accordance with some example embodiments of the present disclosure. For the purpose of discussion, the method 1300 will be described from the perspective of the second apparatus 120 in FIG. 1.

At block 1310, the second apparatus 120 obtains a semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT.

At block 1320, the second apparatus 120 transmits the SPS configuration to the first apparatus.

At block 1330, the second apparatus 120 performs transmission to the first apparatus based on the SPS configuration.

In some example embodiments, the method 1300 may further include at least one of: determining the SPS configuration at least based on the first RAT and the second RAT, and transmitting the SPS configuration to the third apparatus; or receiving the SPS configuration from the third apparatus, wherein the SPS configuration is determined at the third apparatus at least based on the first RAT and the second RAT.

In some example embodiments, the method 1300 may further include at least one of: transmitting, to the first apparatus, an indication for activating the SPS configuration; or transmitting, to the first apparatus, control information indicating that the transmission is scheduled on at least one subsequent SPS occasion; and performing the transmission on the at least one subsequent SPS occasion.

In some example embodiments, the method 1300 may further include: in accordance with a determination that there is data to be transmitted to the first apparatus, transmitting to the third apparatus, a request for resource coordination for transmitting the data; receiving, from the third apparatus, a response indicating accepting or rejecting the request; and in accordance with a determination that the request is accepted, transmitting to the first apparatus, the control information indicating that the transmission is to be scheduled on the at least one subsequent SPS occasion.

In some example embodiments, the request may include a status of a buffer containing the data to be transmitted.

In some example embodiments, the method 1300 may further include: in response to that the transmission is contention-based, transmitting, to the first apparatus, a further configuration for supporting the contention-based transmission.

In some example embodiments, the first RAT may be 5th generation new radio (5G NR), and the second RAT may be the next generation to 5G NR, or wherein the first RAT may be for communication in the next generation to 5G NR, and the second RAT may be for communication in the 5G NR.

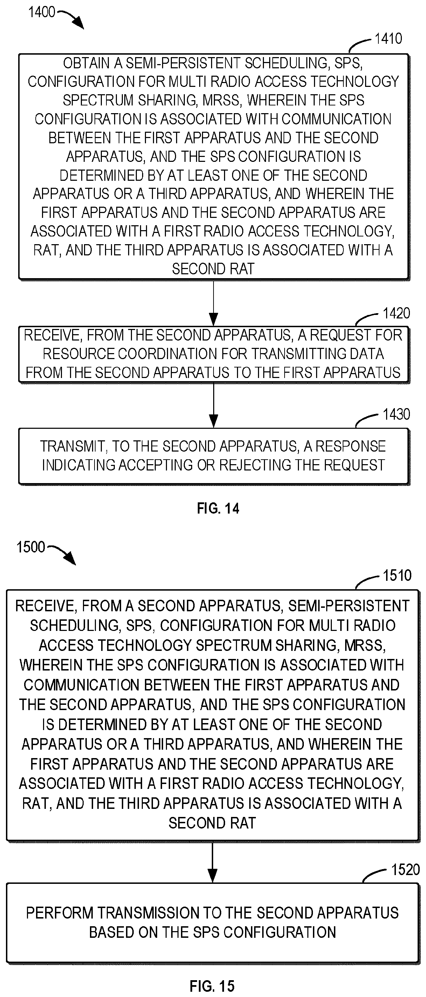

FIG. 14 shows a flowchart of an example method 1400 implemented at a third apparatus in accordance with some example embodiments of the present disclosure. For the purpose of discussion, the method 1400 will be described from the perspective of the third apparatus 130 in FIG. 1.

At block 1410, the third apparatus 130 obtains a semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT.

At block 1420, the third apparatus 130 receives, from the second apparatus, a request for resource coordination for transmitting data from the second apparatus to the first apparatus.

At block 1430, the third apparatus 130 transmits, to the second apparatus, a response indicating accepting or rejecting the request.

In some example embodiments, the method 100 may further include at least one of: determining the SPS configuration at least based on the first RAT and the second RAT, and transmitting the SPS configuration to the second apparatus; or receiving the SPS configuration from the second apparatus, wherein the SPS configuration is determined at the second apparatus at least based on the first RAT and the second RAT.

In some example embodiments, a first apparatus capable of performing any of the method 1200 (for example, the first apparatus 110 in FIG. 1) may include means for performing the respective operations of the method 1200. The means may be implemented in any suitable form. For example, the means may be implemented in a circuitry or software module. The first apparatus may be implemented as or included in the first apparatus 110 in FIG. 1.

In some example embodiments, the first apparatus includes means for receiving, from a second apparatus, semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT; and means for performing reception from the second apparatus based on the SPS configuration.

In some example embodiments, a second apparatus capable of performing any of the method 1300 (for example, the second apparatus 120 in FIG. 1) may include means for performing the respective operations of the method 1300. The means may be implemented in any suitable form. For example, the means may be implemented in a circuitry or software module. The second apparatus may be implemented as or included in the second apparatus 120 in FIG. 1.

In some example embodiments, the second apparatus includes means for obtaining a semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT; means for transmitting the SPS configuration to the first apparatus; and means for performing transmission to the first apparatus based on the SPS configuration.

In some example embodiments, a third apparatus capable of performing any of the method 1400 (for example, the third apparatus 130 in FIG. 1) may include means for performing the respective operations of the method 1400. The means may be implemented in any suitable form. For example, the means may be implemented in a circuitry or software module. The third apparatus may be implemented as or included in the third apparatus 130 in FIG. 1.

In some example embodiments, the third apparatus includes means for obtaining a semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT; means for receiving, from the second apparatus, a request for resource coordination for transmitting data from the second apparatus to the first apparatus; and means for transmitting, to the second apparatus, a response indicating accepting or rejecting the request.

FIG. 15 shows a flowchart of an example method 1500 implemented at a first apparatus in accordance with some example embodiments of the present disclosure. For the purpose of discussion, the method 1500 will be described from the perspective of the first apparatus 110 in FIG. 1.

At block 1510, the first apparatus 110 receives, from a second apparatus, semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT.

At block 1520, the first apparatus 110 performs transmission to the second apparatus based on the SPS configuration.

In some example embodiments, the SPS configuration may include at least one of: a first set of time-frequency resources for the first RAT, a second set of time-frequency resources for the second RAT, a third set of time-frequency resources common to the first RAT and the second RAT, a SPS period, a starting time for the transmission, a first frequency domain resource offset of the first set of time-frequency resources, a second frequency domain resource offset of the second set of time-frequency resources, a third frequency domain resource offset of the third set of time-frequency resources, a first traffic direction of the first set of time-frequency resources, a second traffic direction of the second set of time-frequency resources, a third traffic direction of the third set of time-frequency resources.

In some example embodiments, each of the first traffic direction, the second traffic direction and the third traffic direction may be uplink; or no rate matching may be performed on the third set of time-frequency resources.

In some example embodiments, the method 1500 may further include at least one of: receiving, from the second apparatus, an indication for activating the SPS configuration; or transmitting, to the second apparatus, a message indicating data to be transmitted from the first apparatus to the second apparatus.

In some example embodiments, the message may include at least one of a buffer status report, BSR, or user equipment assistance information, UAI.

In some example embodiments, the method 1500 may further include at least one of: receiving, from the second apparatus, control information indicating that the transmission is to be scheduled on at least one subsequent SPS occasion; and performing the transmission on the at least one subsequent SPS occasion; or in response to that the transmission is contention-based, receiving, from the second apparatus, a further configuration for supporting the contention-based transmission.

In some example embodiments, the control information may further indicate whether the transmission on the at least one subsequent SPS occasion is contention-free or contention-based; or wherein the first RAT may be 5th generation new radio (5G NR), and the second RAT may be the next generation to 5G NR, or wherein the first RAT may be for communication in the next generation to 5G NR, and the second RAT may be for communication in the 5G NR, or wherein the transmission may be performed based on the SPS configuration and a further indication instructing use of SPS resources for a first RAT transmission in contention to a second RAT transmission.

In some example embodiments, the first apparatus may be or be included in a terminal device, the second apparatus may be or be included in a network device, and the third apparatus may be or be included in a further network device.

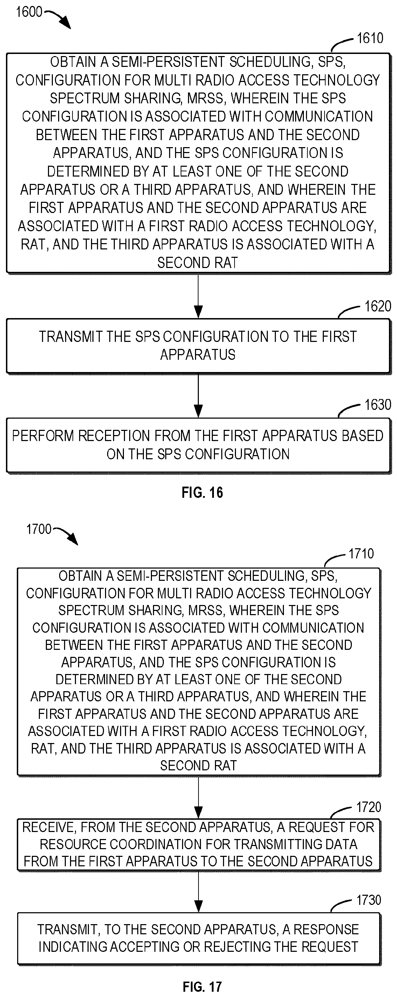

FIG. 16 shows a flowchart of an example method 1600 implemented at a second apparatus in accordance with some example embodiments of the present disclosure. For the purpose of discussion, the method 1600 will be described from the perspective of the second apparatus 120 in FIG. 1.

At block 1610, the second apparatus 120 obtains a semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT.

At block 1620, the second apparatus 120 transmits the SPS configuration to the first apparatus.

At block 1630, the second apparatus 120 performs reception from the first apparatus based on the SPS configuration.

In some example embodiments, the method 1600 may further include at least one of: determining the SPS configuration at least based on the first RAT and the second RAT; and transmitting the SPS configuration to the third apparatus; or receiving the SPS configuration from the third apparatus, wherein the SPS configuration is determined at the third apparatus at least based on the first RAT and the second RAT.

In some example embodiments, the method 1600 may further include at least one of: transmitting, to the first apparatus, an indication for activating the SPS configuration; receiving, from the first apparatus, a message indicating data to be transmitted from the first apparatus to the second apparatus; transmitting, to the first apparatus, control information indicating that the reception is scheduled on at least one subsequent SPS occasion; and performing the reception on the at least one subsequent SPS occasion; or in response to that the reception is contention-based, transmitting, to the first apparatus, a further configuration for supporting the contention-based reception.

In some example embodiments, the method 1600 may further include: in accordance with a determination that there is data to be transmitted from the first apparatus to the second apparatus, transmitting to the third apparatus, a request for resource coordination for receiving the data; receiving, from the third apparatus, a response indicating accepting or rejecting the request; and in accordance with a determination that the request is accepted, transmitting to the first apparatus, the control information indicating that the reception is to be scheduled on the at least one subsequent SPS occasion.

In some example embodiments, the request may include a status of a buffer containing the data to be transmitted from the first apparatus to the second apparatus, or the control information may further indicate whether the reception on the at least one subsequent SPS occasion is contention-free or contention-based, or the first RAT may be 5th generation new radio (5G NR), and the second RAT may be the next generation to 5G NR, or the first RAT may be for communication in the next generation to 5G NR, and the second RAT may be for communication in the 5G NR.

FIG. 17 shows a flowchart of an example method 1700 implemented at a third apparatus in accordance with some example embodiments of the present disclosure. For the purpose of discussion, the method 1700 will be described from the perspective of the third apparatus 130 in FIG. 1.

At block 1710, the third apparatus 130 obtains a semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT.

At block 1720, the third apparatus 130 receives, from the second apparatus, a request for resource coordination for transmitting data from the first apparatus to the second apparatus.

At block 1730, the third apparatus 130 transmits, to the second apparatus, a response indicating accepting or rejecting the request.

In some example embodiments, the method 1700 may further include at least one of: determining the SPS configuration at least based on the first RAT and the second RAT; and transmitting the SPS configuration to the second apparatus; or receiving the SPS configuration from the second apparatus, wherein the SPS configuration is determined at the second apparatus at least based on the first RAT and the second RAT.

In some example embodiments, a first apparatus capable of performing any of the method 1500 (for example, the first apparatus 110 in FIG. 1) may include means for performing the respective operations of the method 1500. The means may be implemented in any suitable form. For example, the means may be implemented in a circuitry or software module. The first apparatus may be implemented as or included in the first apparatus 110 in FIG. 1.

In some example embodiments, the first apparatus includes means for receiving, from a second apparatus, semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT; and means for performing transmission to the second apparatus based on the SPS configuration.

In some example embodiments, a second apparatus capable of performing any of the method 1600 (for example, the second apparatus 120 in FIG. 1) may include means for performing the respective operations of the method 1600. The means may be implemented in any suitable form. For example, the means may be implemented in a circuitry or software module. The second apparatus may be implemented as or included in the second apparatus 120 in FIG. 1.

In some example embodiments, the second apparatus may include means for obtaining a semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT; means for transmitting the SPS configuration to the first apparatus; and means for performing reception from the first apparatus based on the SPS configuration.

In some example embodiments, a third apparatus capable of performing any of the method 1700 (for example, the third apparatus 130 in FIG. 1) may include means for performing the respective operations of the method 1700. The means may be implemented in any suitable form. For example, the means may be implemented in a circuitry or software module. The third apparatus may be implemented as or included in the third apparatus 130 in FIG. 1.

In some example embodiments, the third apparatus includes means for obtaining a semi-persistent scheduling, SPS, configuration for multi radio access technology spectrum sharing, MRSS, wherein the SPS configuration is associated with communication between the first apparatus and the second apparatus, and the SPS configuration is determined by at least one of the second apparatus or a third apparatus, and wherein the first apparatus and the second apparatus are associated with a first radio access technology, RAT, and the third apparatus is associated with a second RAT; means for receiving, from the second apparatus, a request for resource coordination for transmitting data from the first apparatus to the second apparatus; and means for transmitting, to the second apparatus, a response indicating accepting or rejecting the request.

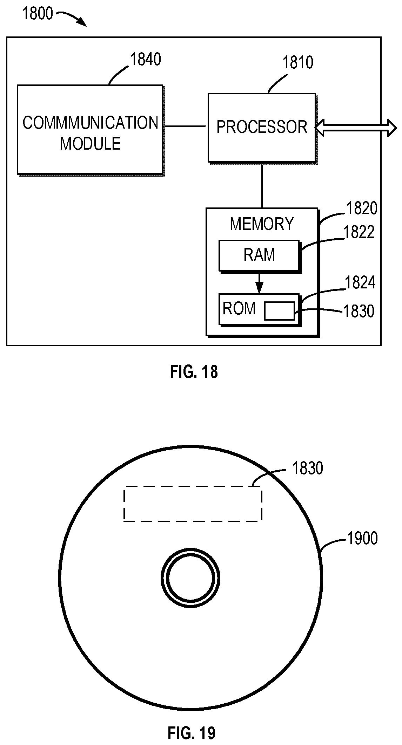

FIG. 18 is a simplified block diagram of a device 1800 that is suitable for implementing example embodiments of the present disclosure. The device 1800 may be provided to implement a communication device, for example, the first apparatus 110, the second apparatus 120 or the third apparatus 130 as shown in FIG. 1. As shown, the device 1800 includes one or more processors 1810, one or more memories 1820 coupled to the processor 1810, and one or more communication modules 1840 coupled to the processor 1810.

The communication module 1840 is for bidirectional communications. The communication module 1840 has one or more communication interfaces to facilitate communication with one or more other modules or devices. The communication interfaces may represent any interface that is necessary for communication with other network elements. In some example embodiments, the communication module 1840 may include at least one antenna.

The processor 1810 may be of any type suitable to the local technical network and may include one or more of the following: general purpose computers, special purpose computers, microprocessors, digital signal processors (DSPs) and processors based on multicore processor architecture, as non-limiting examples. The device 1800 may have multiple processors, such as an application specific integrated circuit chip that is slaved in time to a clock which synchronizes the main processor.

The memory 1820 may include one or more non-volatile memories and one or more volatile memories. Examples of the non-volatile memories include, but are not limited to, a Read Only Memory (ROM) 1824, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1822 and other volatile memories that will not last in the power-down duration.

A computer program 1830 includes computer executable instructions that are executed by the associated processor 1810. The instructions of the program 1830 may include instructions for performing operations/acts of some example embodiments of the present disclosure. The program 1830 may be stored in the memory, e.g., the ROM 1824. The processor 1810 may perform any suitable actions and processing by loading the program 1830 into the RAM 1822.

The example embodiments of the present disclosure may be implemented by means of the program 1830 so that the device 1800 may perform any process of the disclosure as discussed with reference to FIG. 1 to FIG. 11. The example embodiments of the present disclosure may also be implemented by hardware or by a combination of software and hardware.

In some example embodiments, the program 1830 may be tangibly contained in a computer readable medium which may be included in the device 1800 (such as in the memory 1820) or other storage devices that are accessible by the device 1800. The device 1800 may load the program 1830 from the computer readable medium to the RAM 1822 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 19 shows an example of the computer readable medium 1900 which may be in form of CD, DVD or other optical storage disk. The computer readable medium 1900 has the program 1830 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus (110, 210) comprising:
at least one processor; and
at least one memory storing instructions that, when executed by the at least one processor, cause the first apparatus (110, 210) at least to:
receive (430, 703, 1210), from a second apparatus (120, 220), semi-persistent scheduling, SPS, configuration for multi radio access technology spectrum sharing, MRSS, wherein the SPS configuration is associated with communication between the first apparatus (110, 210) and the second apparatus (120, 220), and the SPS configuration is determined by at least one of the second apparatus (120, 220) or a third apparatus (130, 230), and wherein the first apparatus (110, 210) and the second apparatus (120, 220) are associated with a first radio access technology, RAT, and the third apparatus (130, 230) is associated with a second RAT; and
perform (480, 708, 1220) reception from the second apparatus (120, 220) based on the SPS configuration.

2. The first apparatus (110, 210) of claim 1, wherein the SPS configuration comprises at least one of:
a first set of time-frequency resources (510) for the first RAT,
a second set of time-frequency resources (520) for the second RAT,
a third set of time-frequency resources (530) common to the first RAT and the second RAT,
a SPS period,
a starting time for the reception,
a first frequency domain resource offset of the first set of time-frequency resources (510),
a second frequency domain resource offset of the second set of time-frequency resources (520),
a third frequency domain resource offset of the third set of time-frequency resources (530),
a first traffic direction of the first set of time-frequency resources (510),
a second traffic direction of the second set of time-frequency resources (520),
a third traffic direction of the third set of time-frequency resources (530).

3. The first apparatus (110, 210) of claim 2, wherein each of the first traffic direction, the second traffic direction and the third traffic direction is downlink, or
wherein no rate matching is to be performed on the third set of time-frequency resources (530).

4. The first apparatus (110, 210) of any of claims 1 to 3, wherein the first apparatus (110, 210) is caused to perform at least one of:
receiving (440, 704), from the second apparatus (120, 220), an indication for activating the SPS configuration; or
receiving (470, 707), from the second apparatus (120, 220), control information indicating that the reception is to be scheduled on at least one subsequent SPS occasion, and performing (480, 708, 1220) the reception on the at least one subsequent SPS occasion.

5. The first apparatus (110, 210) of claim 4, wherein the control information further indicates whether the reception on the at least one subsequent SPS occasion is contention-free or contention-based, or
wherein the first apparatus (110, 210) is caused to: in response to that the reception is contention-based, receive, from the second apparatus (120, 220), a further configuration for supporting the contention-based reception.

6. The first apparatus (110, 210) of any of claims 1 to 5, wherein the first RAT is for communication in 5th generation new radio (5G NR), and the second RAT is for communication in a next generation to 5G NR, or
wherein the first RAT is for communication in the next generation to 5G NR, and the second RAT is for communication in the 5G NR, or
wherein the reception is performed based on the SPS configuration and a further indication instructing use of SPS resources for a first RAT transmission in contention to a second RAT transmission, or
wherein the first apparatus (110, 210) is or is comprised in a terminal device, the second apparatus (120, 220) is or is comprised in a network device, and the third apparatus (130, 230) is or is comprised in a further network device.

7. A second apparatus (120, 220) comprising:
at least one processor; and
at least one memory storing instructions that, when executed by the at least one processor, cause the second apparatus (120, 220) at least to:
obtain (405, 1310) a semi-persistent scheduling, SPS, configuration for multi radio access technology spectrum sharing, MRSS, wherein the SPS configuration is associated with communication between the first apparatus (110, 210) and the second apparatus (120, 220), and the SPS configuration is determined by at least one of the second apparatus (120, 220) or a third apparatus (130, 230), and wherein the first apparatus (110, 210) and the second apparatus (120, 220) are associated with a first radio access technology, RAT, and the third apparatus (130, 230) is associated with a second RAT;
transmit (425, 703, 1320) the SPS configuration to the first apparatus (110, 210); and
perform (475, 708, 1330) transmission to the first apparatus (110, 210) based on the SPS configuration.

8. The second apparatus (120, 220) of claim 7, wherein the second apparatus (120, 220) is caused to performing at least one of:
determining (405) the SPS configuration at least based on the first RAT and the second RAT, and transmitting the SPS configuration to the third apparatus (130, 230); or
receiving (405, 701) the SPS configuration from the third apparatus (130, 230), wherein the SPS configuration is determined at the third apparatus (130, 230) at least based on the first RAT and the second RAT.

9. The second apparatus (120, 220) of claim 7 or 8, wherein the second apparatus (120, 220) is caused to perform at least one of:
transmitting (704), to the first apparatus (110, 210), an indication for activating the SPS configuration; or
transmitting (465, 707), to the first apparatus (110, 210), control information indicating that the transmission is scheduled on at least one subsequent SPS occasion; and performing (475, 708, 1330) the transmission on the at least one subsequent SPS occasion.

10. The second apparatus (120, 220) of claim 9, wherein the second apparatus (120, 220) is caused to:
in accordance with a determination that there is data (601) to be transmitted to the first apparatus (110, 210), transmit (445, 705), to the third apparatus (130, 230), a request for resource coordination for transmitting the data;
receive (460, 706), from the third apparatus (130, 230), a response indicating accepting or rejecting the request; and
in accordance with a determination that the request is accepted, transmit (465, 707), to the first apparatus (110, 210), the control information indicating that the transmission is to be scheduled on the at least one subsequent SPS occasion.

11. The second apparatus (120, 220) of claim 10, wherein the request comprises a status of a buffer containing the data to be transmitted.

12. The second apparatus (120, 220) of any of claims 9 to 11, wherein the control information further indicates whether the transmission on the at least one subsequent SPS occasion is contention-free or contention-based; or
wherein the second apparatus (120, 220) is caused to: in response to that the transmission is contention-based, transmit, to the first apparatus (110, 210), a further configuration for supporting the contention-based transmission.

13. The second apparatus (120, 220) of any of claims 7 to 12, wherein the first RAT is 5th generation new radio (5G NR), and the second RAT is the next generation to 5G NR, or
wherein the first RAT is for communication in the next generation to 5G NR, and the second RAT is for communication in the 5G NR.

14. A third apparatus (130, 230) comprising:
at least one processor; and
at least one memory storing instructions that, when executed by the at least one processor, cause the third apparatus (130, 230) at least to:
obtain (410, 1410) a semi-persistent scheduling, SPS, configuration for multi radio access technology spectrum sharing, MRSS, wherein the SPS configuration is associated with communication between the first apparatus (110, 210) and the second apparatus (120, 220), and the SPS configuration is determined by at least one of the second apparatus (120, 220) or a third apparatus (130, 230), and wherein the first apparatus (110, 210) and the second apparatus (120, 220) are associated with a first radio access technology, RAT, and the third apparatus (130, 230) is associated with a second RAT;
receive (450, 705, 1420), from the second apparatus (120, 220), a request for resource coordination for transmitting data from the second apparatus (120, 220) to the first apparatus (110, 210); and
transmit (455, 706, 1430), to the second apparatus (120, 220), a response indicating accepting or rejecting the request.

15. The third apparatus (130, 230) of claim 14, wherein the third apparatus (130, 230) is caused to perform at least one of:
determining (410) the SPS configuration at least based on the first RAT and the second RAT, and transmitting (701) the SPS configuration to the second apparatus (120, 220); or
receiving (410) the SPS configuration from the second apparatus (120, 220), wherein the SPS configuration is determined at the second apparatus (120, 220) at least based on the first RAT and the second RAT.
